# EUROPEAN PATENT APPLICATION

(11) **EP 2 530 631 A1**
(43) Date of publication of application: **05.12.2012**
(21) Application number: 11305665.9
(22) Date of filing: 31.05.2011
(51) Int. Cl.: G06Q 10/00, H04W 12/06, H04L 29/06

(54) **A method for accessing at least one service, corresponding communicating device and system**

(71) Applicant: Gemalto SA, 92190 Meudon (FR)
(72) Inventor: Fine, Jean-Yves, 13010 MARSEILLE (FR); Martin, Christophe, 13600 CEYRESTE (FR)

(57) **Abstract**

The invention relates to a method 20 for accessing at least one service. A first communicating device 12 stores at least one token, as service access rights.

According to the invention, the method comprises the following steps. The first communicating device sends to a terminal at least one token 22. The terminal sends to a second communicating device 110 the at least one token 28. The second communicating device or another communicating device connected to the second communicating device analyses whether the at least one token does or does not allow accessing at least one service. Once the service has been accessed from the terminal, the terminal sends the at least one token 216 to the first communicating device or another communicating device connected to the first communicating device.

The invention also relates to corresponding communicating device and system for accessing a service.

## Description

### Field of the invention:

The invention relates, in a general manner, to a method for accessing at least one service.

Moreover, the invention pertains to a first communicating device for accessing at least one service.

Finally, the invention also relates to a system for accessing at least one service.

### State of the art:

US 7,093,752 B2 describes a solution based upon a use of a contact-less card for accessing a closed parking lot, as service.

Such a known solution allows the card user to entry into and exit from a closed parking lot.

However, the user has to be provided with a dedicated physical contact-less card for accessing the closed parking lot. Such a dedicated physical card constitutes an additional portable device which adds to the overall portable devices that the user has to carry, so as to benefit from different services. Mostly, each portable device is dedicated for only one service. In other words, a user should have as many portable devices as the number of the services which the user desires to access.

There is a need to access one or several services without being provided with a dedicated physical card for each service.

### Summary of the invention:

The invention proposes a solution for satisfying the just hereinabove specified need by providing a method for accessing at least one service.

According to the invention, a first communicating device storing at least one token, as service access rights, the method comprises the following steps. The first communicating device sends to a terminal at least one token. The terminal sends to a second communicating device the at least one token. The second communicating device or another communicating device connected to the second communicating device analyses whether the at least one token does or does not allow accessing at least one service. Once the service has been accessed from the terminal, the terminal sends the at least one token to the first communicating device or another communicating device connected to the first communicating device.

The principle of the invention consists in that a (user) terminal fetches a token(s) stored within a communicating device, transmits the fetched token(s) to another communicating device, and, when the fetched token(s) has been used for an access to one service(s), the terminal transmits the used token(s) to the original communicating device or another one connected to it.

One token stored within a communicating device is thus "portable" and is allocated, in a temporary manner, to a terminal, at a time when a terminal user needs to access a service.

The identity of the terminal, as temporary owner of the token, may change from one time to another time, rendering the use of the token dynamic, i.e. usable by a plurality of terminals at different times.

After its use, the token is given back, by the terminal to which the token has been allocated, to a communicating device, namely the communicating device that has provided it or another communicating device, in order to use the token later.

It is to be noted that one and the same token may be provisioned from a communicating device to one or several terminals during different time periods while the token is used only once at a given time by one terminal.

Once used and given back, the token remains therefore available for another use.

Contrary to the herein above described known solution, a user does not need to be equipped with a physical card dedicated to a service which the user desires to access since a user terminal is required to retrieve a token associated with a desired service.

The service may be of any type, such as a service for accessing a mobile radio-communication network.

The invention solution makes it possible, thanks to an exchangeable token(s), as static information, to provide a user terminal with corresponding service access rights.

According to a further aspect, the invention is a first communicating device for accessing at least one service.

According to the invention, the first communicating device comprises means for storing at least one token, as service access rights, and the first communicating device is adapted to send to a terminal at least one token and receive from the terminal the at least one token.

As first communicating device, it can be a contact-less communicating device, like a Radio Frequency IDentification (or RFID) smart object or tag, an infra-red transmitter, or the like.

According to a further aspect, the invention is a system for accessing at least one service.

According to the invention, the system comprises at least one communicating device and a terminal, a first communicating device comprises means for storing at least one token, as service access rights, and means for sending at least one token to a terminal. The terminal comprises means for sending to a second communicating device the at least one token and means for sending, once the service has been accessed from the terminal, the at least one token to the first communicating device or another communicating device connected to the first communicating device. The second communicating device or another communicating device connected to the second communicating device analyses whether the at least one token does or does not allow accessing at least one service.

As terminal, it can be a mobile telephone, a Personal Digital Assistant (or PDA), a palm-top computer, a laptop computer, a netbook, a tablet computer, as personal electronic device.

### Brief description of the drawings:

Additional features and advantages of the invention will be more clearly understandable after reading a detailed description of one preferred embodiment of the invention, given as an indicative and non-limitative example, in conjunction with the following drawings:

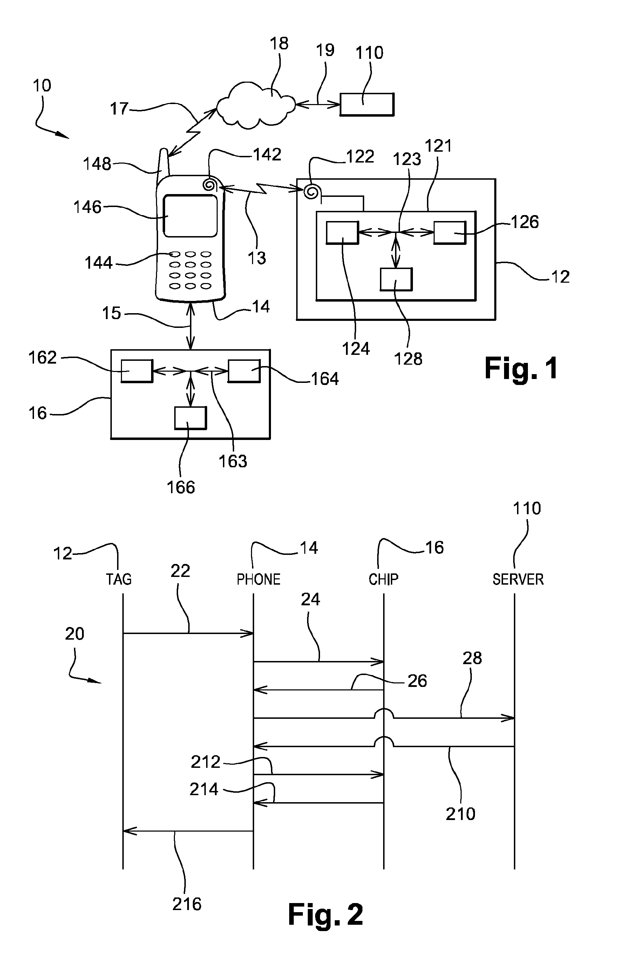

- Figure 1 illustrates a simplified diagram of one exemplary embodiment of a system for accessing one service, the system comprising an RFID smart tag, as first communicating device, a Near Field Communication (or NFC) enabled mobile telephone, as user terminal, a secure chip coupled to the terminal, and a remote server, as second communicating device, the system being adapted to read a token supplied from the RFID smart tag, send the read token to the remote server and write the token into the RFID smart tag, according to the invention; and
- Figure 2 illustrates a simplified message flow of one exemplary embodiment of a method implemented notably by some entities of the system of figure 1, so that the terminal user accesses a service managed by the server, thanks to the secure chip and the token supplied by and given back to the RFID smart tag after its use.

### Detailed description:

Herein under is considered a case in which the invention method for accessing one service is implemented by, among others, an NFC enabled terminal and an NFC chip connected to an antenna in cooperation with a secure chip under a secure chip control.

However, the invention method for accessing one service may be implemented by an NFC enabled terminal and an NFC chip connected to an antenna under a terminal control. In other words, the NFC enabled terminal does not cooperate with any secure chip, so as to access a service. According to such an embodiment (not represented), the NFC enabled terminal is adapted, so as to exert the functions carried out by both the terminal and the secure chip and that are hereinafter described.

Figure 1 shows one embodiment of an electronic system 10 for accessing one service.

The system 10 for accessing one service includes an RFID smart tag 12, an NFC enabled mobile telephone 14, a secure chip 16 and a remote server 110.

For the sake of clarity and conciseness, the RFID smart tag 12, the NFC enabled mobile telephone 14, the secure chip 16 and the remote server 110 are termed hereinafter the tag 12, the phone 14, the chip 16 and the server 110 respectively.

The tag 12, as first and contact-less communicating device, is stuck or fixed at a registration desk (not represented), a car park entry point, a fridge or any other physical element (not represented), as a service delivery point.

Within the present description, the adjective "contact-less" used within the expression "contact-less communicating device" means that the device communicates notably via a short range radio-frequency link by using, for example, International Organization for Standardization/ International Electrotechnical Commission (or ISO/IEC) 14 443 specifications or the like.

The tag 12 is thus associated with a physical element (not represented). The physical element is present at a geographical location from which a service may be requested.

The service may be any type of service to which an access is offered from a particular place, like an airport, a hotel, a bus station, a train station, a state office, a car park, a private home, a hospital and/or a desk office.

The tag 12 comprises, as components, at least one chip 121, i.e. an integrated circuit, and at least one antenna 122 for receiving and transmitting a signal originating from either outside or the chip 121 respectively.

The tag 12 may comprise a battery (not represented) for supplying power to the tag components.

The tag 12 is preferably provided with power through a radio-frequency signal to be received from an external entity, as a contact-less reader.

The tag antenna 122 is configured to receive data from and send data to outside, through a short range radiofrequency link 13.

The short range radiofrequency may be fixed at, for example, 13.56 MHz.

The tag chip 121 is connected to the tag antenna 122.

The tag chip 121 includes preferably one or several non-volatile memories 124, as means for storing data, one or several microprocessors 126, as means for processing data, and at least one Input/Output (or I/O) interface 128, as means for receiving and sending data to outside, connected all together through a control and data bus 123.

As data processing type(s), there are notably modulating a signal to be transmitted, through the tag antenna 122, to an external entity and demodulating a signal to be received, through the tag antenna 122, from an external entity.

The tag chip 121 manages a token list stored within the means 124 for storing data. The tag 12 plays a role of a local token provider or token server. Typically, the tag 12 communicates with its interlocutor up to 20 cm (between the tag 12 and its interlocutor).

According to one interesting feature of the invention, the tag chip 121 is arranged to deliver one or several tokens to one or several user terminals, as external entities.

The tag chip 121 may further be arranged to deliver one or several applications to be supported by a user terminal(s). Each application is associated with one or several tokens to be delivered by the tag chip 121, so as to access a corresponding service managed by the server 110. Thus, the user terminal installs the received application(s). Once the terminal has installed the received application, the terminal executes the installed application by using the associated token(s), so as to access a corresponding service(s) managed by the server 110.

Each token comprises predefined information to be provided by a user to the server 110, so as to access the desired service that is managed by the server 110.

Each token allows its owner to access a service.

The token, as service access rights, includes one or several identifiers, such as an International Mobile Subscriber Identity (or IMSI), as a unique number associated with a mobile radio-communication network user. The IMSI is used for identifying a subscriber in relation to one or several mobile radio-communication networks 18.

The identifier or the plurality of identifiers relating to the token may comprise a user identifier, a service identifier, a server identifier, a service provider identifier and/or other identifier(s).

The token comprises preferably one or several keys that allow accessing a service.

The key(s) relating to the token is(are) preferably associated with the identifier(s) relating to the token.

The key(s) relating to the token may include one key, such as a key Ki, associated with the IMSI, as the token identifier(s). The key Ki allows authenticating a user to the mobile radio-communication network.

The key(s) relating to the token may comprise one key, such as a key Kc, associated with the IMSI, as the token identifier(s). The key Kc allows encrypting data to be exchanged between an external entity that has received the token, and another entity, such as a server 110, that has to be addressed to deliver, thanks to the token (received from the external entity), a service to the external entity. Thus, the key Kc allows protecting data to be sent from at least one entity.

Further data is preferably associated with each token and stored within the means 124 for storing data.

As data stored within the tag chip 121, there is preferably data relating to a counter associated with at least part of the token(s) of the token list. Such a counter allows managing, in a secure manner, the token with which the counter is associated. Such a counter is updated so that one transmission and one reception of the associated token are sequentially carried out before another possible cycle, namely another transmission followed by another reception of the associated token. The token is therefore usable once again only if the token has been written to the tag memory 124 after having read from the tag memory 124 while having provoked a double change of an associated counter value.

As data relating to the token and stored within the tag chip 121, there may be other data to be registered, when an external entity reads (and/or writes) the token, and to be associated with the token. As other data, it may contain an identifier of the terminal, as a terminal identifier, to which the token is transmitted (and/or from which the token is also to be received). The terminal identifier is submitted by the external entity.

As data stored within the tag chip 121, there may be a date and/or a time at which the service is desired to be accessed, i.e. the date and/or the time at which the tag chip 121 sends the token to an external entity, a time period during which the owner of the token accesses the service, i.e. a time difference between the time at the tag chip 121 receives the token from an external entity and the time at which the tag chip 121 sends the token to an external entity, an identifier of an application embedded within the chip 16 (or the phone 14) and to be addressed, a service identifier and/or an identifier of a service provider, as an addressee of a corresponding token and/or other information. Thus, data associated with a token that has been fetched from each external entity, as tag interlocutor, that has used the token traces the history of the token.

The tag microprocessor 126 processes data originating from either the tag memory 124 or, through the I/O interface 128, outside.

The tag microprocessor 126 controls the other tag components 124 and 128 to which the tag microprocessor 126 is connected through the control and data bus 123.

The tag microprocessor 126 preferably executes security functions, in order to protect an access to information, like data relating to a token, stored and managed by the tag chip 121.

The security functions include preferably a verification of a uniqueness of a use the token at a time. The tag chip 121 checks that the token is used by only one user at a given time and has to be got back before being allowed to be transmitted again for another use. To ensure that the token is used only once at a time, the tag chip 121 is preferably arranged to modify a counter, on the one hand, prior to a sending of the token to an external entity, from a first counter value to a second counter value and, on the other hand, after having received the token from an external entity, from the second counter value to the first counter value. The first value is, for instance, a default value, like a bit value set to "1". The second value is, for instance, a predetermined value, like a bit value set to "0". If the counter value matches the first counter value, then the tag chip 121 authorizes to output notably stored data relating to the token. Otherwise, i.e. if the counter value is not equal to the first value, then the tag chip 121 forbids to output notably stored data relating to the token by blocking its reading.

The security functions include preferably a user authentication process to be used before accessing data stored within the tag memory 124. To authenticate the user, the tag chip 12 sends to its interlocutor data, as a command for launching an execution of a user authentication application supported by an external entity, as a terminal, or another device, like a secure electronic device, coupled to or connected to the external entity. The interlocutor either supports the user authentication application or addresses to another entity that supports the user authentication application the command for launching an execution of a user authentication application.

Preferentially, the chip 16, as secure electronic device, coupled to the phone 14, as terminal, supports a user authentication application (that is described in detail infra). Alternately, the phone 14 supports a user authentication application.

The security functions may include a code verification process by which a terminal user has to submit, through a terminal I/O interface(s), an access code, as a challenge and access rights, that has to be received and compared by the tag chip 121 with a predetermined access code stored within the tag memory 124. Only if a submitted access code and the access code stored within the tag memory 124 match, then the tag chip 121 authorizes a release of data relating to a token stored within the tag memory 124. Otherwise, i.e. if a submitted access code and the stored access code do not match, the tag chip 121 refuses to release data relating to a token stored within the tag memory 124.

The security functions include preferentially an encryption/decryption process to be used before sending data relating to the token, so as to protect an access to the data relating to a token, stored and managed by the tag 12. To encrypt data relating to a token to be sent, the tag chip 121 uses a key denoted Ks that is stored within the tag memory 124 and shared with the chip 16 (or the phone 14 alternately), as an addressee of the data relating to the token and an encryption algorithm, such as an Advanced Encryption Standard (or AES), a Data Encryption Standard (or DES) or the like. The tag chip 121 encrypts data relating to a token with the shared key Ks1 before sending it, in an encrypted manner, to outside. The key Ks1 may be a public key that is associated with a corresponding private key relating to the tag chip 121. The corresponding private and public keys are both stored within the tag memory 124. To decrypt data relating to a token to be received, the tag chip 121 may use a key denoted Ks2 that is stored within the tag memory 124 and shared with the chip 16 (or the phone 14 alternately), as an originator of the data relating to the token and a decryption algorithm, such as an AES, a DES or the like. To share the key Ks1 and/or Ks2, the tag chip 121 and an external entity, as the tag interlocutor, may exchange, prior to a sending of data relating to a token from the tag chip 121, their respective public keys Ks1 and/or Ks2, so as to implement a mechanism relating to an asymmetric Public Key Infrastructure (or PKI). According to an alternative, the shared key is one and the same key denoted Ks. According to such an alternative, to share the key Ks, the tag chip 121 and an external entity, as the tag interlocutor, may have been loaded, prior to a sending of data relating to a token from the tag chip 121, with the shared key, so as to implement a mechanism relating to a symmetric PKI.

As to the terminal, it may be any device including one or several microprocessors, as means for processing data, comprising or being connected to a contact-less antenna 142 for sending to and/or receiving from, through the short range radio-frequency link 13, outside, comprising or being connected to means for interfacing with a user, as Man Machine Interface (or MMI), like a keyboard 144, a loudspeaker (not represented) and/or a display screen 146, and comprising or being connected to one or several memories (not represented), as means for storing data.

For example, instead of a phone, the terminal may be constituted by a Personal Digital Assistant (or PDA), a mobile laptop, a portable TeleVision (or TV), a tablet computer and/or a netbook.

The phone 14 is equipped with a contact-less antenna 142 for exchanging data, through the short range radio-frequency link 13, with an external entity(ies) and an NFC chip (not represented) connected to the contact-less antenna 142.

The phone 14 comprises preferably another antenna termed hereinafter network antenna 148 for exchanging data, through a long range radio-frequency link 17, via a mobile radio-communication network 18, with the server 110.

The mobile radio-communication network 18 may be constituted by a Global Service for Mobiles (or GSM), a Universal Mobile Telecommunications System (or UMTS), a Code Division Multiple Access (or CDMA) and/or a Long Term Evolution (or LTE) type network(s). The mobile radio-communication network list is not exhaustive but only for exemplifying purposes.

The phone 14, as user terminal and mobile handset, plays preferably a role of a contact-less reader with respect to the tag 12.

The phone 14 includes at least one battery (not represented), at least one microprocessor (not represented), at least one memory (not represented) and at least one I/O interface.

The phone memory stores data, such as an identifier of a terminal identification, like an International Mobile Equipment Identity (or IMEI) number. The phone 14 may give access to the IMEI number, so as to send this latter to the tag 12 and/or the server 110.

The phone microprocessor processes data originating from either the phone memory or, through the I/O interface, outside.

The phone 14 is connected to the NFC chip.

The phone 14 controls power to be provided to the NFC chip, to let this latter operate, i.e. exchange data with the tag 12.

According to an alternative, instead of the phone 14, the chip 16 controls power to be provided to the NFC chip. The phone 14 is used to let communicate the chip 16, through the NFC chip, and the tag 12. According to another embodiment (not represented), the chip 16 is connected to the NFC chip and communicates directly with the NFC chip, i.e. without involving the phone 14.

The NFC chip is powered by the phone battery and transmits, through the contact-less antenna 142, a signal, so as to power the tag 12.

The NFC chip plays a role of a modulator-demodulator (or modem) for the chip 16 (or the phone 14 alternately), i.e. a device that:
- demodulates a received analogical carrier signal that is received, over the contact-less antenna 142, from the tag 12, so as to decode the encoded digital information, and
- modulates an analogical carrier signal to be transmitted, over the contact-less antenna 142, to the tag 12, so as to encode digital information received from the chip 16.

The phone 14 is connected, through a bi-directional link 15, to the chip 16.

The phone I/O interface includes preferably an I/O interface, so as to exchange data with the chip 16. The interface with the chip 16 may be an International Organization for Standardization (or ISO) type 7816 interface, as a contact interface when the chip 16 is lodged within the phone 14.

According to another embodiment, the chip 16 is embedded within the phone 14.

The phone microprocessor executes preferably a Web browser, as user interface, so as to interact with a target application supported by the chip 16 and offered to the chip user.

The chip 16 is a smart electronic object that is intended to communicate with the outside world. The chip 16 may be incorporated within any electronic medium that may have different form factors, like, for instance, a Subscriber Identity Module (or SIM) type smart card, a Secure Digital (or SD) type card, a Multi-Media type Card (or MMC), a smart dongle of the USB (acronym for "Universal Serial Bus") type, or a chip to be fixed to a user terminal, as host device, possibly in a removable manner.

The chip 16 belongs to a user, preferably the terminal user.

The chip 16 includes preferentially at least one microprocessor 162, as data processing means, at least one memory 164, and at least one I/O interface 166 which are internally linked together through a data and control bus 163.

The chip memory 164 can be constituted by one or several EEPROM (acronym for "Electrically Erasable Programmable Read-Only Memory"), one or several ROM (acronym for "Read Only Memory"), one or several Flash memories, and/or any other memories of different types, like a Random Access Memory type.

The chip 16 is connected, through a bi-directional link 15, to the phone 14.

The chip 16 may include an ISO 7816 interface, so as let communicate the chip 16 and the phone 14.

The communication between the chip 16 and the phone 14 is used in particular to benefit from the MMI of the phone 14.

The chip 16 plays a role of a safe for at least one token to be fetched from a local external entity, such as the tag 12.

The chip user has preferably subscribed to a service(s) managed by the chip 16 thanks to a corresponding token(s) to be fetched.

The communication between the chip 16 and the phone 14 may also be used for accessing the server 110 to which the phone 14 is connected, depending on a service to which a corresponding token to be fetched gives access.

The chip memory 164 stores a target application algorithm relating to a process, according to the invention, for accessing at least one service.

The target application is offered to the chip 16 user.

The user may access such a target application and triggers its execution thanks to a corresponding application identifier that originates from the tag 12 that stores it.

According to a preferred embodiment, the target application allows collecting, from the tag 12, data relating to a token, storing, in a temporary and secure manner, the collected token, submitting the stored token, through the phone 14, to the server 110 to access a service managed by the server 110 and writing the stored token into the tag memory 124.

The chip microprocessor 162 is preferably able to initiate actions, in order to interact directly with the outside world, in an independent manner of the phone 14. Such a capacity of interaction at the initiative of the chip 16 is also known as proactive capacity. The chip 16 is thus enable to send, at its own initiative, to the phone 14 a proactive command, also known as "Display text", for displaying, through the phone display screen 146, some message and/or another command for requesting a user input, through the phone 14 MMI.

The chip microprocessor 162 preferably executes security functions, in order to protect an access to a token to be read, through the NFC chip, from the tag 12.

The security functions include preferably a user authentication application to be executed before accessing, in particular, data relating to a token stored within the tag memory 124. To authenticate the user, the chip 16 may store an application for verifying a Personal Identity Number (or PIN) or personal biometrics data stored securely within the chip 16 and to be input by the chip 16 user, so as to compare with the stored PIN or personal biometrics data and authorize, when successful, a running of the target application.

The security functions include preferentially an encryption/decryption application to be used before sending, through the phone 14, to the server 110 a fetched token, so as to protect an access to the data relating to the fetched token and managed by the chip 16 and exchanged between the chip 16 and the server 110.

The chip memory 164 stores at least a target application and that allows exchanging data between firstly the chip 16 and the tag 12, secondly the chip 16 and the server 110 and thirdly the chip 16 and the tag 12.

Such a target application may be written in an object-oriented language, such as Java, also termed applet when developed in Java. According to such a corresponding embodiment, the chip memory 164 stores a Java Virtual Machine (or JVM) that interprets and executes the applet.

The user may access the target application and triggers its execution thanks to a corresponding application identifier that originates from the tag 12 that stores it.

Alternately, the user may access this application and triggers its execution, through a Sim Application ToolKit (or STK) like menu or a Web server embedded within the chip 16 that lists all the applications supported by the chip 16.

The chip memory 164 may store, for example, a SIM application for a GSM network, a Universal Subscriber Identity Module (or USIM) for a UMTS network, a CDMA Subscriber Identity module (or CSIM) for a CDMA network, a Removable User Identity Module (or RUIM) for GSM, UMTS and CDMA networks, and/or an Internet protocol multimedia Services Identity Module (or ISIM) for IP Multimedia Subsystem (or IMS).

The chip memory 164 may store user data, like a first name, a last name, a bank account number, a birth date, a private key, a PIN, one biometrics print(s) (like a fingerprint(s), a facial print(s) and/or an iris print(s)) and/or other appropriate data.

The stored user data may be accessed, so as to be provided to the tag 12 and/or the server 110.

Once the chip 16 has fetched a token originating from a tag 12, the chip 16 stores securely, within its memory 164, the token, like an IMSI and an associated key Ki, as a unique number for identifying a subscriber in relation to one or several mobile radio-communication networks associated with all GSM, UMTS, CDMA and/or LTE type network(s), and a key allowing to authenticate a user to the mobile radio-communication network(s).

According to one embodiment, the chip memory 164 stores, for example, a SIM application for a GSM network, a Universal Subscriber Identity Module (or USIM) for a UMTS network, a CDMA Subscriber Identity module (or CSIM) for a CDMA network, a Removable User Identity Module (or RUIM) for GSM, UMTS and CDMA networks, and/or an Internet protocol multimedia Services Identity Module (or ISIM) for IP Multimedia Subsystem (or IMS). The SIM type application uses the fetched token, namely the IMSI/Ki, to access a service, like one or several phone calls, managed by the server 110.

The target application allows submitting to an external server 110, as a second communicating device, data relating to a token fetched from the tag 12.

Preferably, the target application allows transmitting the fetched token, through the phone 14 and the mobile communication network(s) 18, to the remote server 110, as a second communicating device.

Alternatively, the target application allows transmitting the fetched token, through the phone NFC chip, i.e. through a short range radio-frequency link (not represented), and an NFC enabled Personal Computer, to a local server.

Once the chip user has accessed one service thanks to the fetched token, the chip 16 is arranged to give back the used token to either the tag 12 or, preferably through the NFC chip, another communicating device (not represented) that is connected to the tag 12.

The server 110 to be addressed is identified either within data associated with a token retrieved from the tag 12 or by data stored within the chip memory 164.

The server 110, as addressee of the fetched data relating to a token, may be identified by an Uniform Resource Identifier (or URI), like an Uniform Resource Locator (or URL), as server identifier.

The server 110, as second communicating device, comprises one microprocessor(s), as means for processing data, means for storing data and one I/O interface(s).

The server 110 is hosted by a computer and is dedicated to running an application for managing one or several services.

The server 110 may be operated by either a mobile radio-communication network operator or on its behalf, a bank operator and/or a service provider or on its behalf. As service provider, it may also be a company, as a transport operator, that manages a transport service, like a bus, a train, a plane and/or a loyalty service.

The server 110 is arranged to analyze whether each submitted token that is received from the chip 16 does allow or does not allow the requesting chip user to access a managed service(s).

Figure 2 depicts an example of a message flow 20 that involves notably the tag 12, the phone 14, the chip 16 and the server 110.

In the explained example, the chip user desires to access, through the phone 14 MMI, thanks to an application (supported by the chip 16) allowing to fetch from the tag 12 an IMSI/Ki, as token, a service managed by the server 110 to which the token is submitted.

It is assumed that the phone display screen 146 displays a list of application(s) offered from and/or through the chip 16.

It is assumed that the chip 16 supports a SIM type application that needs the token to access the remote server 110.

The tag 12 is preferably not powered by a supply infrastructure and not connected to any network. The tag 12 is a standalone entity.

Firstly, the user selects, through the phone 14 MMI, the target application, so as to retrieve a token from the tag 12, transmit to the server 110 the retrieved token, and once used, return the token to the tag 12.

The phone 14 (and more exactly its microprocessor) detects that the selected application is supported by the chip 16.

The phone 14 addresses to the chip 16 a corresponding request (not represented) for executing the concerned application chosen by the chip user.

Optionally, the chip 16 checks whether the user is the true user, for example, by verifying that a PIN or a biometrics print entered by the user matches the PIN (or the biometrics print) stored within the chip 16, in order to authenticate the user before accessing the target application managed by the chip 16.

The chip 16 triggers an execution of the selected target application.

The chip user carrying the phone 14 approaches, at a service delivery point, the tag 12, so as to power this latter and send a request (not represented) for reading a token that is stored within the tag 12 possibly accompanied with a server identifier, such as a server URI.

The tag 12 analyses whether a token of the token list managed by the tag 12 is available for being transmitted to the chip 16, as an external entity, i.e. that a token is not currently used by another external entity.

As soon as the tag 12 detects that a token is available, i.e. when already used the token has been given back to the tag 12, the tag 12 allows transmitting the available token.

Optionally, prior to a sending of the available token to the chip 16, the tag 12 verifies whether the chip 16 user has corresponding access rights. To check the access rights, the tag 12 sends a command for launching an execution of an application supported by the chip 16. The chip 16 allows to request from the chip user, for example, through the phone MMI, an access code to be entered by the phone user. Once entered, the chip 16 sends to the tag 12 the entered access code. If the sent access code matches effectively a reference access code stored within the tag memory 124, then the tag 12 allows providing the chip 16 with the available token.

Preferably, the tag 12 verifies that a use of a token is unique at a given time, so that single rights for accessing a service are granted to a user at a time.

The tag 12 implements preferably a semaphore mechanism, so as to control a delivery of the token. The semaphore mechanism prevents the token from being read once again while it has not been previously written. To implement the semaphore mechanism, the tag 12 modifies a counter associated with the token by changing a default value, like a bit value "1", indicating that the token is available to another value, like a bit value "0", indicating that the token is no more available (since it has been previously read by an external entity).

The tag 12 may use a key, such as a key denoted Ks, shared with the chip 16 so as to encrypt the token to be delivered to the chip 16.

The tag 12 may write data associated with the chip 16, the phone 14 and/or the user, the time at which the token is sent, in association with the token to be sent, so as to track the token use and write its history into the tag memory 124.

The tag 12 sends, via the short-range radio-frequency link 13, through the NFC chip, to the phone microprocessor (not represented) a token 22 possibly along with other data, like a server identifier, that is stored within the tag memory 124.

Once the token has been received, the phone 14 forwards the token 24 possibly along with other data to the chip 16.

The chip 16 writes into its memory 164 the collected token possibly along with other data. Instead of being provided by the tag 12, besides the token, the other data may have been previously loaded (within the chip memory 164) with a server identifier, like a server phone number to be addressed, and/or other data necessary to access the server 110.

The chip 16 that is running the target application sends, preferably at its own initiative, to the phone 14 a pro-active type command 26, like "SEND SMS", as a request for sending to the identified server 110 a message including the collected token along with other data.

Then, the phone 14 sends to the server 110 a message 28, such as a Short Message Service (or SMS) message, a Multimedia Message Service (or MMS) message and/or an email that comprises the received token along with other data.

Once the server 110 receives the collected token, the server 110 (or another communicating device connected to the server) analyses whether the at least one token does or does not allow accessing at least one service analyses whether the token does allow or does not allow accessing a service managed by the server 110.

If the collected token matches a predetermined token accessible from the server 110, then the server 110 authorizes the chip 16 user to access the requested service.

Otherwise, if the collected token does not match a predetermined token accessible from the server 110, the server 110 denies the chip 16 user an access to the requested service.

When the server 110 grants access to the chip 16 user, the server 110 executes a corresponding application.

Accordingly, the server 110 sends to the phone 14 at least one message 210, such as a SMS message, a MMS message and/or an email. The message 210 contains data relating to the requested service, such as authorization data and/or other data.

Once the chip user has benefited from the service offered thanks to the collected token, the phone user indicates, through the phone MMI, that she/he does no more need an access to the concerned service.

The phone 14 sends to the chip 16 a message 212 for terminating an access to the service.

Then, the user (who carries the phone 14 and the chip 16) approaches the tag 12, so as to power this latter and further exchange data with it.

The chip 16 sends to the phone 14 a request 214 for writing the used token into the tag memory 124 possibly accompanied with other data to be associated with the token, like the time at which the token is sent back to the tag 12.

Preferably, the chip 16 encrypts the token by using a key shared with the tag 12 and a predetermined encryption algorithm, so that only the tag 12 is able to obtain clear token.

The phone 14 forwards to the tag 12 a request 216 for writing the used token into the tag memory 124 possibly accompanied with other data to be associated with the token.

Optionally, prior to a writing of the token into the tag memory 124, the tag 12 verifies whether the chip 16 user has corresponding access rights.

Preferably, the tag 12 implements the semaphore mechanism. The semaphore mechanism prevents notably the token from being written once again while it has not been previously read. To implement the semaphore mechanism, the tag 12 modifies the counter associated with the token by changing its previous value, like a bit value "0", indicating that the token is not available to the other value, like a bit value "1 ", indicating that the token is now available.

The tag 12 may use a key, such as a key denoted Ks, shared with the chip 16 so as to decrypt an encrypted token originating from the chip 16.

Then, the tag 12 writes the token possibly with other data associated with the chip 16, the phone 14 and/or the user, the time at which the token is sent back, in association with the used token, so as to track the token use and write its history into the tag memory 124.

Such a use of the chip 16 and the phone 14 that is coupled to this latter, as invention system 10, is easy and therefore convenient for the chip user. Since the invention system 10 allows the user to be dynamically provided with a token, use it and give it back.

Moreover, the tag 12 has, as a standalone entity, a very low cost infrastructure, that is also robust, since there is no need of power supply. The tag 12 has a low risk to be damaged with respect to a network infrastructure to be installed.

The tag 12 is easy to be modified in its content.

The tag 12 use allows implementing security functionalities, so as to protect an access to a token stored and managed by the tag 12 and/or exchange, in a secure manner, with a tag interlocutor data relating to a token.

## Claims

1. A method (20) for accessing at least one service,
**characterized in that**, a first communicating device (12) storing at least one token, as service access rights, the method comprises the following steps:
- the first communicating device sends to a terminal at least one token (22);
- the terminal sends to a second communicating device (110) the at least one token (28);
- the second communicating device or another communicating device connected to the second communicating device analyses whether the at least one token does or does not allow accessing at least one service;
- once the service has been accessed from the terminal, the terminal sends the at least one token (216) to the first communicating device or another communicating device connected to the first communicating device.

2. Method according to claim 1, wherein, prior to a sending of the token to the terminal, the first communicating device verifies a uniqueness of a use of each of the at least one token at a time.

3. Method according to claim 1 or 2, wherein, prior to a sending of the token to the terminal, the first communicating device verifies whether a terminal user has corresponding access rights.

4. Method according to any of the claims 1 to 3, wherein, prior to a sending of the at least one token to the terminal, the first communicating device modifies a counter by changing from a default value to another predetermined value, and wherein, after having received the at least one token from the terminal, the first communicating device modifies the counter by changing from the other predetermined value to the default value.

5. Method according to any of the claims 1 to 4, wherein the first communicating device encrypts the at least one token to be sent and wherein the terminal decrypts the at least one encrypted token by using a key shared between the first communicating device and the terminal.

6. Method according to any of the claims 1 to 5, wherein each token comprises at least one element of a group comprising:
- a user identifier;
- a service identifier;
- a key for accessing a service;
- a key for encrypting data to be exchanged between the terminal and the second communicating device or another communicating device connected to the second communicating device.

7. Method according to any of the claims 1 to 6, wherein, after having received the at least one token from the terminal, the first communicating device stores at least one element of a group comprising:
- a terminal identifier;
- a user identifier;
- a service identifier;
- a time period during which the at least one token has been used.

8. A first communicating device (12) for accessing at least one service, **characterized in that** the first communicating device comprises means for storing at least one token, as service access rights, and
**in that** the first communicating device is adapted to:
- send to a terminal at least one token; and
- receive from the terminal the at least one token.

9. Device according to claim 8, wherein the first communicating device includes a contact-less communicating device.

10. A system (10) for accessing at least one service,
**characterized in that** the system comprises at least one communicating device (16) and a terminal (14),
**in that** a first communicating device comprises means (124) for storing at least one token, as service access rights, and means for sending at least one token to a terminal;
**in that** the terminal comprises means for sending to a second communicating device (110) the at least one token and means for sending, once the service has been accessed from the terminal, the at least one token to the first communicating device or another communicating device connected to the first communicating device;
**in that** the second communicating device or another communicating device connected to the second communicating device analyses whether the at least one token does or does not allow accessing at least one service.
